# EUROPEAN PATENT SPECIFICATION

(11) **EP 1 415 831 B1**
(45) Date of publication and mention of the grant of the patent: **21.09.2005**
(21) Application number: 03009418.9
(22) Date of filing: 25.04.2003
(51) Int. Cl.: B60H 3/06, B01D 46/44

(54) **Instrument Panel comprising a filter structure of a vehicular air conditioner**
Armaturenbrett mit einem Filter für eine Fahrzeugklimaanlage
Planche du bord d'un véhicule avec un filtre pour une installation de climatisation

(30) Priority: 02.11.2002 KR 2002067639
(43) Date of publication of application: 06.05.2004
(73) Proprietor: KIA MOTORS CORPORATION, Seoul (KR)
(72) Inventor: Kim, Dong-il, Anyang-shi, Kyunggi-do (KR)
(74) Representative: Viering, Jentschura & Partner

(56) References cited:
- EP-A- 0 861 984
- EP-B- 0 608 034
- DE-A- 3 631 258
- DE-A- 3 716 049
- DE-B- 2 900 433

## Description

The invention relates to an instrument panel according to the preamble of claim 1.

As the number of vehicles has increased, the environment, in particular the air, has been polluted with various pollutants, such as particulates, harmful gases and so forth, which are generated from various types of vehicles. This air pollution problem is becoming more serious. In general, a vehicle is mounted with an air conditioner. This air conditioner is designed so that indoor air of the vehicle is forcibly circulated by a fan while the indoor air is subjected to heat exchange, or that outdoor air of the vehicle is forcibly introduced indoors. Here, the outdoor air contains not only various fine solid pollutants, such as dusts, particulates, pollen grains and so forth, but also various gaseous pollutants incurring a malodor.

These pollutants can be decreased in concentration as low as possible by preventing them from entering the inside of the vehicle. To this end, such an air conditioner is generally provided with a filter, thereby maintaining a comfortable indoor environment.

In the conventional air conditioner, such a filter is typically mounted between a blower unit and an air discharge passage in a cartridge fashion, so that the filter can be exchanged after a lid of a glove box on the front passenger's seat side is detached.

However, the filter is inevitably concealed in the inside beyond the glove box owing to a vehicle's layout, so that there is a disadvantage in that the driver has little idea of the position where the filter is mounted, and even if the driver does know, he/she has difficulty in checking whether or not the filter is contaminated.

In order to overcome this disadvantage, there have been proposed several approaches in the art.

For instance, some approaches are designed to provide the filter with an optical sensor. Of them, one is constructed so that when the filter is contaminated with pollutants, the optical sensor causes a light receiving part to cut off a signal, and thus a warning lamp is flashed. Another is constructed so that when the filter is accumulated with pollutants, an air pressure difference is generated across the filter, and thus a light source is displaced, which is checked.

Further, some different approaches are designed to provide the filter with an airflow sensor. Of them, one is constructed so that when the filter is contaminated with pollutants, this is determined, and thus a warning lamp is flashed. Another is constructed so that when the filter is contaminated with pollutants, an intake air pressure difference is generated across the filter, and thus a conductive thin film is fluctuated to enable a warning lamp to be flashed.

However, these conventional approaches have problems in that each has a relatively complicated construction and increased production cost due to a circuit structure having various types of sensors, warning lamps and so forth.

DE-A-3716049 discloses a filter structure comprising a filter mat and a light source for radiating light toward one side, the light being blocked at the position when pollutants are deposited on the filter mat enough to cause a contaminated state of the filter to reach a preset state.

The present invention has been made to solve the foregoing problems and it is therefore an object of the present invention to provide a filter structure of a vehicular air conditioner comprising a display section in which a display state changes according to a contaminated state of the filter used therein, thereby allowing a driver to check a proper exchange time of the filter visually.

According to the invention, this is achieved by an instrument panel according to the features of claim 1. Advantageous further embodiments are described in the subclaims.

The above and other objects, features and other advantages of the present invention will be more clearly understood from the following detailed description taken in conjunction with the accompanying drawings, in which:
FIG. 1 shows a filter structure of a vehicular air conditioner according to a preferred embodiment of the present invention;
FIG. 2 shows a display section of a filter of a vehicular air conditioner according to a preferred embodiment of the present invention;
FIG. 3 shows a mounted state of a filter of a vehicular air conditioner according to a preferred embodiment of the present invention; and
FIGs. 4A and 4B show an operation of a display section of a filter of a vehicular air conditioner according to a preferred embodiment of the present invention, in which FIG. 4A shows when the filter operates normally, while FIG. 4B shows when the filter needs to be exchanged.

A preferred embodiment of the invention will be described in detail below with reference to the accompanying drawings.

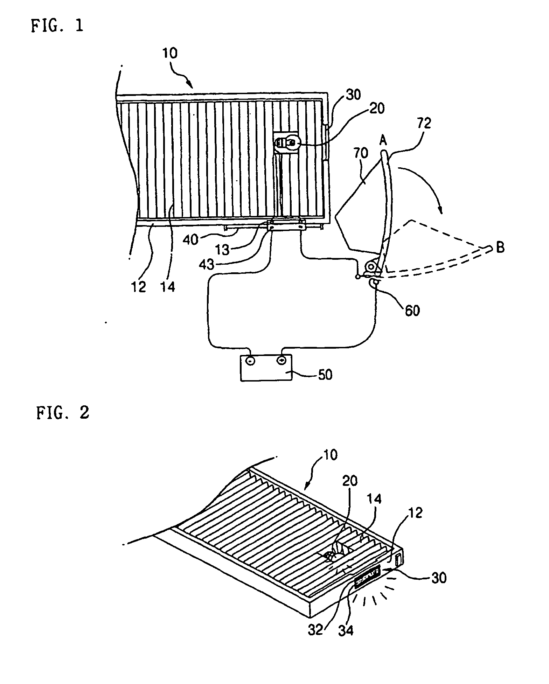

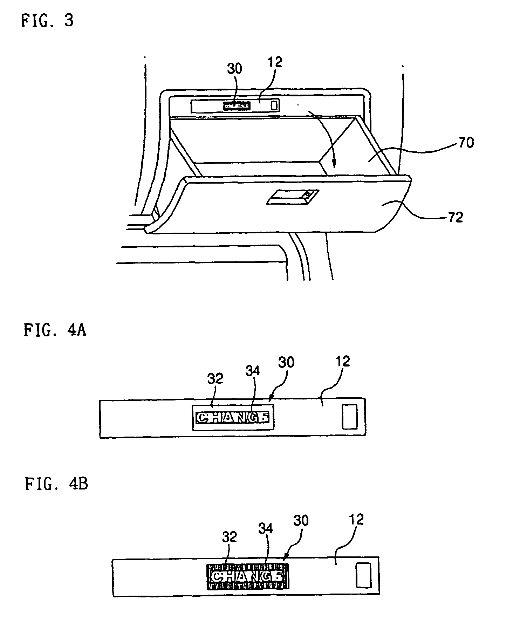

FIG. 1 shows a filter structure of a vehicular air conditioner according to a preferred embodiment of the present invention, FIG. 2 shows a display section of a filter of a vehicular air conditioner according to a preferred embodiment of the present invention, FIG. 3 shows a mounted state of a filter of a vehicular air conditioner according to a preferred embodiment of the present invention, and FIGS. 4A and 4B show an operation of a display section of a filter of a vehicular air conditioner according to a preferred embodiment of the present invention, in which FIG. 4A shows when the filter operates normally, while FIG. 4B shows when the filter needs to be exchanged.

A filter of a vehicular air conditioner according to the present invention is mounted between a blower unit and an air discharge passage in a way similar to a conventional one. In particular, the filter is mounted at an exchangeable position after a lid 72 of a glove box on the front passenger's seat side is detached.

This filter is mounted in a way similar to a cartridge for the sake of convenient assembly and exchange. A filter cartridge 10 is constructed so that a plurality of filter papers 14 are formed as a plurality of layers within a roughly rectangular case 12.

A light source 20 is provided between the filter papers 14 in order to radiate light toward a display section 30, as will be mentioned below. In particular, when pollutants are deposited on the filter papers 14 and thus a contaminated state of the filter reaches a "preset state", the light source is provided at such a position that light radiated toward the display section 30 is capable of being blocked.

Here, the term "preset state" refers to one in that pollutants are deposited on the filter papers 14 to an extent enough to determine that the filter cartridge 10 needs to be exchanged. However, such a preset state may be somewhat varied according to a specific specification of the filter papers 14, such as paper material or like.

After this preset state is roughly determined, it is determined at which position the light source 20 is installed. To be more specific, when pollutants are not deposited on the filter paper 14, a constant intensity of light arrives at the display section 30. However, when the filter papers 14 are contaminated up to the preset state, deposited pollutants cause light to be blocked, so that it is impossible for the light to reach the display section 30. Therefore, the position of the light source 20 is determined in view of such a relationship.

As the light source 20, a component, such as a miniature electric bulb, a light emitting diode (LED) may be used to generate light when power is applied.

Meanwhile, the display section 30 is installed on the case 12 of the filter cartridge 10, and is formed to transmit the light radiated from the light source 20 enough to be seen visually from the outside.

To this end, the display section 30 includes a base part 32 made of a transmittable material and a checking part 34 formed with a color (e.g., white), which is similar to that of the base part 32 (e.g., daylight blue) when light is transmitted, but is contrasted with that of the base part 32 (dark color) when light is not transmitted.

In other words, when the filter has a low contamination level, the base part 32 is not easily distinguished from the checking part 34. By contrast, when the filter has a high contamination level, light radiated toward the base part 32 is almost blocked. Therefore, the checking part 34 is easily recognized against the base 32. On the basis of this principle, the contamination level of the filter is indicated to the driver. In this case, the checking part 34 is preferably constructed as a word, such as "EXCHANGE".

On the other hand, the case 12 of the filter cartridge 10 is provided on one side with a first contact 13 connected with the light source 20. A body 40 of the filter, into which the filter cartridge 10 is detachably inserted, is provided with a second contact 43 connected with a power source 50.

That is to say, when the filter cartridge 10 is inserted into the filter body 40, the first contact 13 comes into contact with the second contact 43, so that a circuit connecting the light source 20 to the power source 50 is formed. This construction allows for eliminating the necessity to exchange every time a wire harness for supplying power whenever the filter is exchanged, so that it is very convenient to do work on wiring.

A switch 60 is provided between the power source 50 and the second contact 43 in order to open/close the circuit. The switch 60 is turned on/off in a contactable manner by a pivot on the lower end of the lid 72 of the glove box. Therefore, the switch 60 allows the circuit to be closed when the lid 72 of the glove box is opened, so that power is applied to the light source 20.

Therefore, only when the lid 72 of the glove box is opened, the light is illuminated toward the display section 30 which is positioned on the inside beyond the glove box 70.

Hereinafter, description will be made regarding an operation of a filter of an air conditioner according to a preferred embodiment of the present invention.

When the lid 72 of the glove box is opened from A position to B position in FIG. 1, the switch 60 is contacted, i.e., turned on by the lower end of lid 72 of the glove box. As a result, the circuit is closed, power is applied to the light source 20 within the filter cartridge 20, and the driver is able to see the light transmitted to the display section 30 directly.

The light radiated from the light source 20 passes through the layers of the filter papers 14 to reach the display section 30. Here, when the amount of pollutant material deposited on the filter papers 14 is low, a considerable amount of light radiated from the light source 20 reaches the display section 30. However, when the amount of pollutant material deposited on the filter papers 14 is high, most of light radiated from the light source 20 is blocked by the layers of the filter papers 14.

FIG. 4A shows the display section when the amount of pollutant material is low, while FIG. 4B shows the display section when the amount of pollutant material is high.

As shown, when the amount of pollutant material is low, a considerable amount of light radiated from the light source is transmitted through the base part 32 of the display section 30, and thus the base part 32 is easily distinguished from the checking part 34. However, when the amount of pollutant material is high, the radiated light hardly reaches the display section 30. Therefore, the base part 32 shows up as a dark color and the checking part 34 is colored with a light color, which is contrasted with the dark color, and thereby the driver is able to easily see the fact that the exchange time of the filter has arrived.

As will be seen from the foregoing, the filter structure of the vehicular air conditioner of the present invention allows a driver to check a proper exchange time of the filter visually through a display section in which a display state changes according to a contamination state of the filter. Consequently, reduction of air flow and generation of malodor caused by pollutants can be prevented through the proper exchange of the filter.

Further, the present invention has an advantage in that the number of components, circuit configuration, etc., are very simple as compared with the other filter structures carrying out the same functions, and thus production cost is inexpensive and a vehicular weight is hardly increased.

While the present invention mentioned above has been shown and described in connection with the preferred embodiment, it is intended that the present invention is not limited to the foregoing embodiment but those skilled in the art can make various modifications and variations without departing from the invention as defined in the appended claims.

For example, the switch does not need to cooperate with the glove box, as the glove box is opened/closed. Therefore, the switch may be turned on/off by a driver's separate manipulation. In addition, the display section can provide various modifications in the particular configuration. In particular, as long as the driver can check a deposition degree of pollutants on the filter, the display section may be modified into a different form.

## Claims

1. An instrument panel comprising a filter structure of a vehicular air conditioner, the filter structure comprising:
a filter cartridge (10) provided with a plurality of filter papers (14) which are formed into a plurality of layers within a case (12), and
a light source (20), provided at a position within the filter papers (14), for radiating light toward one side of the case (12), the light being blocked at the position when pollutants are deposited on the filter papers (14) enough to cause a contaminated state of the filter to reach a preset state,
**characterized by** a display section (30), provided on the case (12), for transmitting the light radiated from the light source (20) to be checked on the external side with a naked eye, and comprising a base part (32) made of a transmittable material and a checking part (34) formed with a color which is similar to that of the base part (32) when light is transmitted, but which is contrasted with that of the base part (32) when light is not transmitted.

2. The instrument panel according to claim 1, wherein the case (12) of the filter cartridge (10) is provided on one side with a first contact (13) connected with the light source (20), and a filter body (40) into which the filter cartridge (10) is detachably inserted is provided with a second contact (43) connected with a power source (50), so that when the filter cartridge (10) is inserted into the filter body (40), the first contact (13) comes into contact with the second contact (43) to form a circuit connecting the light source (20) to the power source (50).

3. The instrument panel according to claim 2, further comprising a switch (60) for opening/closing the circuit between the power source (50) and the second contact (43).

4. The instrument panel according to claim 3, wherein the display section (30) is positioned on the inside beyond a glove box, and wherein the switch (60) is turned on/off in a contactable manner by a pivot on a lower end of a lid (72) of the glove box, so that when the lid of the glove box is opened, the switch (60) causes the circuit to be closed to apply power to the light source (20).

## Patentansprüche

1. Armaturenbrett mit einer Filterstruktur einer Fahrzeugklimaanlage, wobei die Filterstruktur aufweist:
einen Filtereinsatz (10), der mit einer Mehrzahl von Filterpapieren (14) versehen ist, welche in eine Mehrzahl von Schichten innerhalb eines Gehäuses (12) geformt sind, und
eine Lichtquelle (20), die zur Abstrahlung von Licht zu der einen Seite des Gehäuses (12) hin in einer Position innerhalb der Filterpapiere (14) vorgesehen ist, wobei das Licht in der Position blockiert wird, wenn Schadstoffe an den Filterpapieren (14) ausreichend abgelagert sind, um einen Kontaminierungszustand des Filters zum Erreichen eines vorbestimmten Zustandes zu bewirken,
**gekennzeichnet durch** einen Anzeigebereich (30), der zur Übertragung des von der Lichtquelle (20) abgestrahlten Lichtes an dem Gehäuse (12) vorgesehen ist, um an einer Außenseite mit einem bloßen Auge geprüft zu werden, und der ein Basisteil (34) aus einem übertragbaren Material und ein Prüfteil (34) aufweist, das mit einer Farbe versehen ist, welche gleich der des Basisteils (32) ist, wenn Licht übertragen wird, aber welche sich von der des Basisteils (32) abhebt, wenn kein Licht übertragen wird.

2. Armaturenbrett nach Anspruch 1, wobei das Gehäuse (12) des Filtereinsatzes (10) an der einen Seite mit einem ersten Kontakt (13) versehen ist, der mit der Lichtquelle (20) verbunden ist, und ein Filterkörper (40), in welchen der Filtereinsatz (10) lösbar eingesetzt ist, mit einem zweiten Kontakt (43) versehen ist, der mit einer Stromquelle (50) verbunden ist, so dass, wenn der Filtereinsatz (10) in den Filterkörper (40) eingesetzt wird, der erste Kontakt (13) mit den zweiten Kontakt (43) in Kontakt gelangt, um einen Schaltkreis zu bilden, der die Lichtquelle (20) mit der Stromquelle (50) verbindet.

3. Armaturenbrett nach Anspruch 2, ferner aufweisend einen Schalter (60) zum Öffnen/Schließen des Schaltkreises zwischen der Stromquelle (50) und dem zweiten Kontakt (43).

4. Armaturenbrett nach Anspruch 3, wobei der Anzeigebereich (30) an der Innenseite über einem Handschuhfach positioniert ist, und wobei der Schalter (60) in einer kontaktierbaren Weise mittels eines Gelenks an einem unteren Ende einer Klappe (72) des Handschuhfachs ein/aus geschaltet wird, so dass, wenn die Klappe des Handschuhfachs geöffnet wird, der Schalter (60) bewirkt, dass der Schaltkreis geschlossen wird, um Strom an die Lichtquelle (20) anzulegen.

## Revendications

1. Tableau de bord comprenant une structure de filtre d'un climatiseur de véhicule, la structure de filtre comprenant:
une cartouche de filtre (10) pourvue d'une pluralité de papiers-filtres (14), qui sont agencés selon une pluralité de couches à l'intérieur d'un boîtier (12), et
une source de lumière (20) prévue dans une position à l'intérieur des papiers-filtres (14) pour projeter une lumière en direction d'un côté du boîtier (12), la lumière étant bloquée dans cette position lorsque des polluants se déposent d'une manière suffisante sur les papiers-filtres (14) pour amener un état pollué du filtre à atteindre un état préréglé,
**caractérisé par** une section d'affichage (30), prévue sur le boîtier (12), pour transmettre la lumière projetée par la source de lumière (20), devant être vérifiée sur le côté extérieur à l'oeil nu, et comprenant une partie de base (32) formée d'un matériau permettant une transmission et une partie de contrôle (34) réalisée avec une couleur qui est similaire à celle de la partie de base (32) lorsqu'une lumière est transmise, mais qui est contrastée par rapport à la partie de base (32) lorsque la lumière n'est pas transmise.

2. Tableau de bord, selon la revendication 1, dans lequel le boîtier (12) de la cartouche de filtre (10) comporte, sur un côté, un premier contact (13) connecté à la source de lumière (20), et un corps de filtre (40), dans lequel la cartouche de filtre (10) est insérée de façon amovible, est pourvu d'un second contact (43) connecté à une source d'alimentation (50), de sorte que lorsque la cartouche de filtre (10) est insérée dans le corps de filtre (40), le premier contact (13) vient en contact avec le second contact (43) de manière à former un circuit connectant la source de lumière (20) à la source d'alimentation (50).

3. Tableau de bord selon la revendication 2, comprenant en outre un interrupteur (60) pour ouvrir / fermer le circuit entre la source d'alimentation (50) et le second contact (43).

4. Tableau de bord selon la revendication 3, dans lequel la section d'affichage (30) est positionnée à l'intérieur au fond d'une boîte à gants, et dans lequel l'interrupteur (60) est fermé / ouvert, d'une manière pouvant établir un contact au moyen d'un pivot sur une extrémité inférieure d'un couvercle (72) de la boîte à gants de sorte que lorsque le couvercle de la boîte à gants est ouvert, l'interrupteur (60) réalise la fermeture du circuit pour alimenter la source de lumière (20).
